# EUROPÄISCHE PATENTANMELDUNG

(11) **EP 1 939 450 A2**
(43) Veröffentlichungstag der Anmeldung: **02.07.2008**
(21) Anmeldenummer: 07120126.3
(22) Anmeldetag: 07.11.2007
(51) Int. Cl.: F04B 39/10

(54) **Selbsttätiges Ringventil**

(30) Priorität: 22.12.2006 AT 21272006
(71) Anmelder: Hoerbiger Kompressortechnik Holding GmbH, 1220 Wien (AT)
(72) Erfinder: Spiegl, Bernhard, 1230, Wien (AT); Testori, Markus, 2020, Hollabrunn (AT); Steinrück, Peter, 4830, Hallstatt (AT)
(74) Vertreter: Weiss, Christian

(57) **Zusammenfassung**

Um eine einfache Nachbearbeitung eines Ventilsitzes 3 eines Ringventils 1 mit einer Anzahl von am Ventilsitz 3 in radialer und in Umfangsrichtung verteilt angeordneten und davon abstehenden Ringführungsnasen 15 zur Führung von Dichtringen 5 in radialer und axialer Richtung zu ermöglichen, wird vorgeschlagen, im Ventilsitz 3 zwischen zwei auf dem selben Radius liegenden Ringführungsnasen 15 eine sich in Umfangsrichtung erstreckende Vertiefung 18 vorzusehen, wodurch bei der Nachbearbeitung der Dichtflächen 17 des Ventilsitzes 3 zwischen den Dichtflächen 17 im Bereich der Vertiefung 18 kein die Abströmung negativ beeinflussender Steg stehen bleiben kann.

## Beschreibung

Die gegenständliche Erfindung betrifft ein selbsttätiges Ringventil mit einem Ventilsitz, mit einem Ventilfänger, mit einer Anzahl zwischen Ventilsitz und Ventilfänger angeordneten und hin- und herbeweglichen konzentrischen Dichtringen, die mit dem Ventilsitz dichtend zusammenwirken, und mit einer Anzahl von am Ventilsitz in radialer und in Umfangsrichtung verteilt angeordneten und axial davon abstehenden Ringführungsnasen zur Führung der Dichtringe in radialer und axialer Richtung, sowie ein Verfahren zum Herstellen und zum Nachbearbeiten eines Ventilsitzes eines solches Ringventils.

Bei Ringventilen, insbesondere für die Anwendung bei Verdichtern, kann das Ventilelement entweder als eine Reihe von ringförmigen Öffnungen aufweisende Ventilplatte ausgeführt sein oder aus einer Anzahl von separaten konzentrischen Dichtringen gebildet werden. Bei Verwendung konzentrischer Dichtringen ist es bereits bekannt, zusätzlich eine Synchronplatte zu verwenden, die auf den Dichtringen aufliegt und gemeinsam damit bewegt wird, um die Ringöffnungsbewegung der einzelnen Dichtringe zu synchronisieren und zu dämpfen. Die Dichtringe und die Synchronplatte bilden dabei gemeinsam das Ventilelement, wobei die Dichtringe und die Synchronplatte aber nur lose aneinander liegen. Die Dämpfungswirkung der Synchronplatte ergibt sich dabei einerseits durch das Eigengewicht der Synchronplatte, andererseits kann die Synchronplatte auch federbelastet sein. Die Ausführung mit Synchronplatte bietet zusätzlich den Vorteil, dass große und robuste Federn gewählt werden können, welche an den Knoten der aus in Umfangsrichtung verlaufenden Öffnungen und Radialstegen bestehenden Synchronplatte angesetzt werden. Ein solches Ringventil ist zum Beispiel aus der AT 391 928 B oder der EP 345 245 A2 bekannt. Zusätzlich kann im Ringventil auch noch eine eigene Dämpfungsplatte vorgesehen sein, wie ebenfalls in der EP 345 245 A2 gezeigt. Eine solche Dämpfungsplatte ist aber vom Dichtelement unabhängig und beabstandet vom Dichtelement angeordnet und dient nur dazu, die Ringöffnungsbewegung im Wesentlichen durch das Eigengewicht ab einer bestimmten Öffnung des Ventils weiter zu dämpfen.

Die Verwendung einer Synchronplatte hat aber den Nachteil, dass üblicherweise fängerseitige Führungen durch die Synchronplatte hindurch ragen müssten, um die Ringführung zu gewährleisten, wie aus älteren Ringventilen bekannt. Die durch die Synchronplatte ragenden fängerseitigen Führungen, würden die Synchronplatte einerseits stark schwächen. Andererseits führt dies jedoch auch zu einer signifikanten negativen Beeinflussung des Strömungsquerschnittes und damit der Effizienz des Ventils. Insbesondere bei Hochleistungsventilen ist eine derartige Beeinflussung nicht zulässig. Gleichzeitig erfordern darüber hinaus hoch beanspruchte Ventile eine wesentlich bessere und genauere Ringführung, da es sonst zu unzulässigen Querbewegungen der Dichtringe und damit erhöhten Verschleiß kommen kann, was zu vermeiden ist. Dieses Problem wird durch Positionierung von Ringführungsnasen am Ventilsitz umgangen, wie auch aus älteren Ventilausführungen bekannt. Jedoch führt die Positionierung der Ringführungen am Ventilsitz bei der Wartung und Überholung der Ringventile zu erheblichen Problemen bei der Nacharbeit der Ventilsitze in den Servicewerkstätten, da die Flächen zwischen den Ringführungen nur mit aufwendiger Fräsbearbeitung und nicht durch einfaches Drehen nachgearbeitet werden kann. Diese Flächen müssten bei einer Nachbearbeitung der Dichtflächen, z.B. durch ein Abdrehen der Dichtflächen, im Regelfall aber ebenfalls bearbeitet werden - zumal ein entsprechender Ausgleich über den Ventilhub nicht möglich ist - da ansonsten durch den zwischen den Dichtflächen stehen bleibenden Steg die Abströmung des gasförmigen Mediums negativ beeinflusst werden könnte. Bei Ventilhüben im mm-Bereich ergeben sich ohnehin schon sehr enge Ventilspalte zwischen Dichtring und Dichtfläche am Ventilsitz, die die Strömung durch das Ventil sehr empfindlich auf Störungen machen. Aus dem Grund der notwendigen aufwendigen Nachbearbeitung wurden solche Ventile daher trotz der möglichen Vorteile bisher eher nicht eingesetzt.

Es ist daher eine Aufgabe der gegenständlichen Erfindung, ein Ringventil der eingangs genannten Art so weiterzubilden, dass der Ventilsitz eines solchen Ringventils im Zuge der Wartung und Überholung sehr einfach und für die Funktion des Ringventils sicher nachgearbeitet werden kann.

Diese Aufgabe wird erfindungsgemäß dadurch gelöst, indem im Ventilsitz zwischen zwei auf demselben Radius liegenden Ringführungsnasen eine sich in Umfangsrichtung erstreckende Vertiefung vorgesehen ist. Durch diese Vertiefung wird sichergestellt, dass, zumindest im Bereich der Vertiefung, zwischen zwei benachbarten Dichtflächen beim Nachbearbeiten, z.B. durch Abdrehen, der Dichtfläche im Umfangsrichtung kein Steg übrig bleibt und somit die Abströmung nicht beeinflusst wird. Eine solche Vertiefung ermöglicht somit eine sehr einfache Nachbearbeitung, da dazu keine aufwendige Fräsbearbeitung mehr zwischen den Ringführungsnasen erforderlich ist. Erst dadurch kann der Ventilsitz einfach nachbearbeitet und als Folge ein solches Ringventil wirtschaftlich eingesetzt werden.

Bevorzugt ist die Vertiefung zwischen zwei in Umfangsrichtung benachbarten Ringführungsnasen durchgehend vorgesehen, da dann zwischen den Ringführungsnasen in keinem Bereich ein Steg stehen bleiben kann, was für die Abströmung sehr vorteilhaft ist. Ebenso ist bevorzugt vorgesehen, dass die Vertiefung zwischen zwei benachbarten Dichtflächen des Ventilsitzes radial durchgehend ist.

Die Nachbearbeitung der Dichtflächen kann vereinfacht werden, wenn an einer Ringführungsnase im Bereich des Überganges zum Ventilsitz eine Hinterschneidung angeordnet ist.

Die gegenständliche Erfindung wird im Nachfolgenden anhand der schematischen, nicht einschränkenden Figuren 1 bis 4, die jeweils ein bevorzugtes Ausführungsbeispiel zeigen, beschrieben. Dabei zeigt
Fig. 1 einen Schnitt durch ein erfindungsgemäßes Ringventil,
Fig. 2 eine Explosionsdarstellung dieses Ringventils,
Fig. 3 eine Detaildarstellung des Ventilsitzes und,
Fig. 4 einen Ausschnitt des Ventilsitzes in vergrößerter Darstellung.

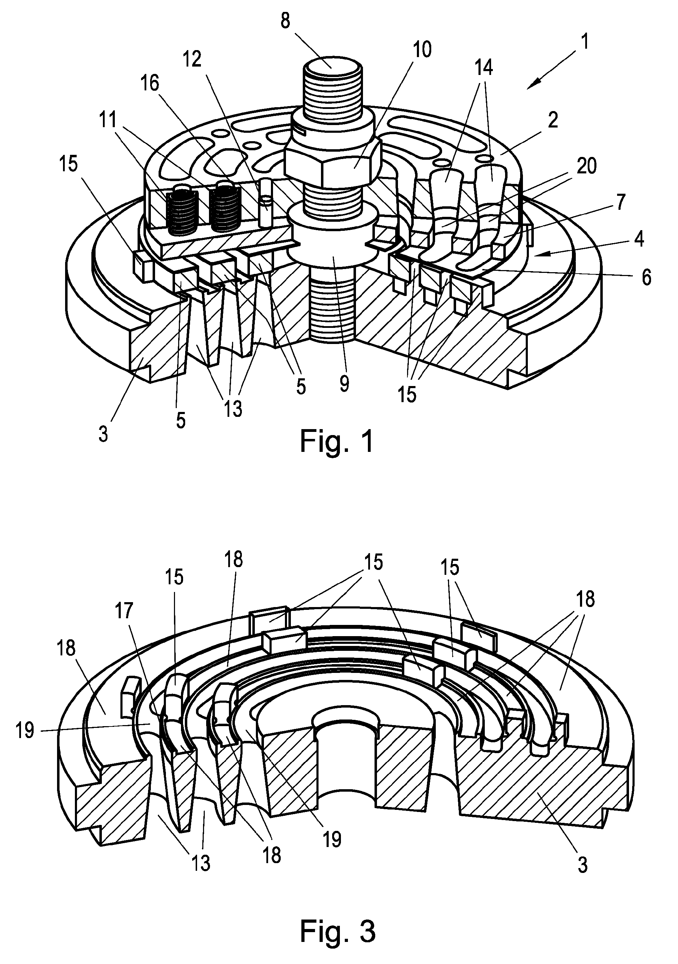

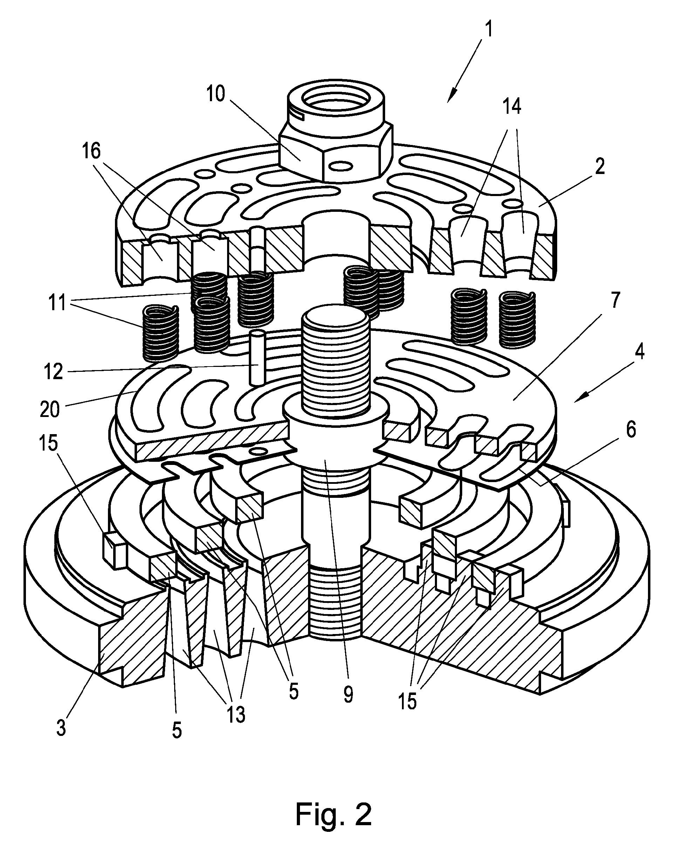

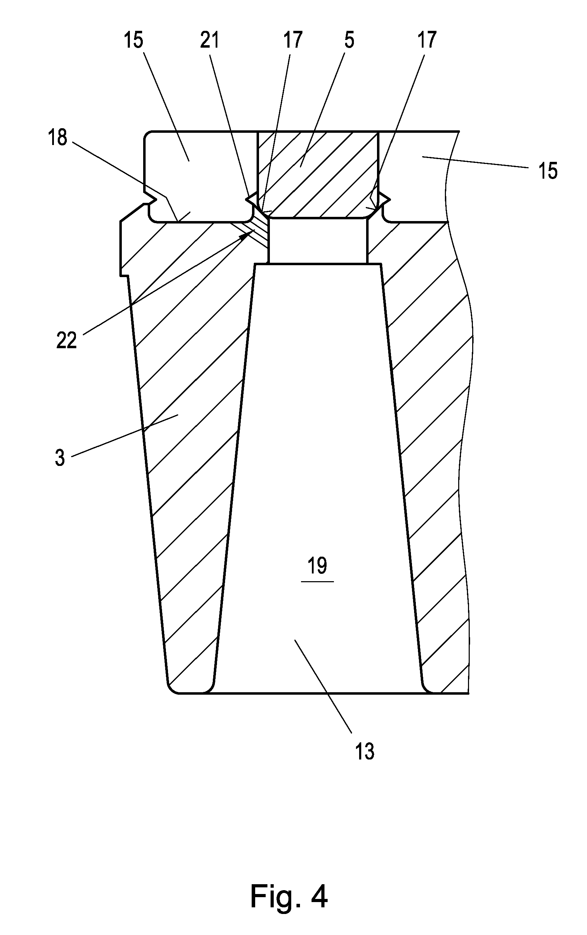

Der grundsätzliche Aufbau eines Ringventils 1 ist hinlänglich bekannt, weshalb hier nur kurz unter Bezugnahme auf Fig. 1 und 2 darauf eingegangen wird. Ein Ringventil 1, z.B. für den Einsatz in Verdichtern, besteht aus einem Ventilsitz 3 und einem Ventilfänger 2. Dazwischen ist ein Ventilelement 4 angeordnet, das zwischen Ventilsitz 3 und Ventilfänger 2 hin- und herbewegt wird und im Zusammenwirken mit dem Ventilsitz 3 die Dichtungsfunktion übernimmt, indem es den Strömungsquerschnitt durch das Ringventil 1 verschließt und freigibt. Die einzelnen Teile des Ringventils 1 werden durch einen durchgehenden Bolzen 8 und einer Mutter 10 zusammengehalten. Der Abstand zwischen Ventilsitz 3 und Ventilfänger 2, und somit der mögliche Ventilhub, wird durch eine Distanzscheibe 9 oder einen axialen Vorsprung am Ventilfänger 2 oder am Ventilsitz 3 eingestellt. Im Ventilsitz 3 sind ringförmige Durchgangskanäle 13 und im Ventilfänger 2 ringförmige Abströmkanäle 14 angeordnet. Die ringförmigen Kanäle 13, 14 sind wie bekannt eigentlich Kreisringabschnitte, die durch Radialstege 19 unterbrochen werden (wie besser in Fig. 3 und 4 ersichtlich).

Das Ventilelement 4 umfasst konzentrisch angeordnete Dichtringe 5, die mit den Ventilsitz 3 zusammenwirken. Dazu sind an den Dichtringen 5 und am Ventilsitz 3 jeweils zugeordnete und zusammenwirkende Dichtflächen 17 angeordnet. Die Dichtflächen 17 an den Dichtringen 5 können zum Beispiel eben sein (also in einer Normalebene zur Achse des Ringventils 1 liegen), die Dichtringe 5 können als Dichtflächen 17 aber auch abgeschrägte Kanten aufweisen, wie z.B. in Fig. 3 und 4 gezeigt, oder die Dichtringe 5 könnten auch torisch ausgebildete Dichtflächen aufweisen. Grundsätzlich sind aber auch andere beliebig geformte Dichtflächen möglich. Die entsprechend zugeordneten Dichtflächen 17 am Ventilsitz 3 sind dabei auf jeden Fall ebenfalls entsprechend geformt.

Am Ventilsitz 3 sind über den Umfang verteilt und in unterschiedlichen radialen Abständen eine Anzahl von vom Ventilsitz 3 axial in Richtung der Dichtringe 5 abstehende Ringführungsnasen 15 angeordnet, zwischen denen die einzelnen Dichtringe 5 sowohl in radialer als auch in axialer Richtung geführt angeordnet sind. Die Ringführungsnasen 15 stehen dabei axial zumindest soweit aus dem Ventilsitz 3 heraus, dass die Dichtringe 5 während der gesamten Ringöffnungsbewegung geführt bleiben. Eine Ringführungsnase 15 ist dabei in radialer Richtung zwischen zwei Dichtflächen 17 des Ventilsitzes 3 angeordnet.

Das Ventilelement 4 kann weiters eine Synchronplatte 7, die an den dem Ventilsitz 3 gegenüberliegenden Seiten der Dichtringe 5 angeordnet ist, und eine zwischen Synchronplatte 7 und Dichtringe 5 liegende Trennplatte 6 umfassen. Die Synchronplatte 7 wird durch eine Reihe von in Federnestern 16 am Ventilfänger 2 angeordneten Spiralfedern 11 federbelastet. Die Spiralfedern 11 drücken somit die Dichtringe 5 über die Synchronplatte 7 gegen den Ventilsitz 3. Während der Ringöffnungsbewegung werden die Dichtringe 5 durch den anstehenden Gasdruck entgegen der Kraft der Spiralfedern 11 vom Ventilsitz 3 abgehoben. Anstelle der Spiralfedern 11 könnten in bekannter Weise aber auch Federplatten vorgesehen sein oder es könnte die Befederung durch aus der Synchronplatte 7 heraus gebogene federende Arme erfolgen. Die Synchronplatte 7, die Trennplatte 6 und die Dichtringe 5 bilden das Ventilelement 4 des Ringventils 1, liegen lose aneinander und werden gemeinsam bewegt.

In der Synchronplatte 7 und die Trennplatte 6 sind natürlich wieder eine Reihe von, bevorzugt ringförmigen (eigentlich eine Reihe von Kreisringabschnitten, die durch Radialstege getrennt werden), Durchströmöffnungen 20 angeordnet, damit das gasförmige Medium möglichst verlustlos durch das Ringventil 1 durchtreten kann.

Damit die Durchströmöffnungen 20 der Synchronplatte 7 und der Trennplatte 6 zu den Durchgangskanälen 13 des Ventilsitzes 3 und den Abströmkanälen 14 des Ventilfängers 2 richtig positioniert bleiben (und den verfügbaren Strömungsquerschnitt nicht verkleinern), wird verhindert, dass sich diese Teile relativ zueinander verdrehen und die Durchströmöffnungen 20 und/oder die Kanäle 13, 14 dadurch teilweise verdeckt werden. Dazu kann durch eine entsprechende Öffnung im Ventilfänger 2, der Synchronplatte 7 und der Trennplatte 6 ein Verdrehsicherungsstift 12 gesteckt werden. In radialer und axialer Richtung können die Synchronplatte 7 und die Trennplatte 6 an einer Komponente des Ringventils, wie z.B. der Distanzscheibe 9, geführt werden. Diese Verdrehsicherung und Führung kann aber natürlich auch auf andere möglichen Arten hergestellt werden, z.B. durch entsprechende Vorsprünge und Anschläge an den einzelnen Teilen, wie z.B. an der Trennplatte 6.

Wie in Fig. 3, und im Detail in Fig. 4, dargestellt, ist jeweils in Umfangsrichtung zwischen zwei auf demselben Radius liegenden Ringführungsnasen 15 und in radialer Richtung zwischen den Dichtflächen 17 zweier benachbarter Dichtringe 5 bzw. radial außerhalb oder radial innerhalb der radial äußersten bzw. innersten Dichtfläche 17 eine Vertiefung 18 in den Ventilsitz 3 eingearbeitet, z.B. bei der Herstellung des Ventilsitzes 3 einmalig eingefräst.

An der durchgehenden kreisringförmigen Dichtfläche 17 am Ventilsitz 3, die z.B. eben, schräg, torisch oder beliebig anders geformt sein kann, liegt der Dichtring 5 an und dichtet die Durchgangskanäle 13 ab. Falls die Ringführungsnasen 15 breiter sind, oder aufgrund der Breite der Dichtringe 5 breiter sein müssen, als die Vertiefung 18, kann am Übergang von Ringführungsnase 15 zur Dichtfläche 17 auch eine Hinterschneidung 21 vorgesehen sein, um die Nachbearbeitung der Dichtfläche 17 zu erleichtern.

Der Ventilsitz 3 ist grundsätzlich ein Rotationskörper. Durch die vom Ventilsitz 3 abstehenden Ringführungsnasen 15 kann der Bereich zwischen den Ringführungsnasen 15 aber nicht durch Drehen bearbeitet werden, sondern nur durch Fräsen, was ungleich aufwendiger ist. Durch die bereits in den Ventilsitz 3 eingearbeiteten Vertiefungen 18 kann die Dichtfläche 17 am Ventilsitz 3 abgedreht werden, ohne dass am Ventilsitz 3 zwischen den Dichtflächen und Ringführungsnasen 15 ein die Strömung beeinflussender Steg stehen bleibt, womit eine Nachbearbeitung sehr einfach möglich wird. Je nach Tiefe der Vertiefung 18, bevorzugt sind Tiefen von 1 bis 5mm, kann der Ventilsitz 3 bzw. die Dichtfläche 17 sogar mehrmals nachbearbeitet (nachgedreht) werden, wie durch die Marken 20 in Fig. 4 angedeutet.

Grundsätzlich muss die Vertiefung 18 in Umfangsrichtung zwischen den Ringführungsnasen aber nicht durchgehend sein, wenn der oder die durch die nicht durchgehende Vertiefung und durch die Nachbearbeitung stehen bleibende Steg(e) zwischen den Dichtflächen 17 die Abströmung für die Funktion des Ringventils 1 nur vernachlässigbar gering oder gering genug beeinflusst. Ebenso müsste die Vertiefung 18 in radialer Richtung nicht durchgehend eingearbeitet sein, sondern es sind auch zwei oder mehr konzentrische Vertiefungen denkbar, ebenfalls wieder wenn der oder die durch die nicht durchgehende Vertiefung und durch die Nachbearbeitung stehen bleibende Steg zwischen den Dichtflächen 17 die Abströmung nur vernachlässigbar gering oder gering genug beeinflusst. Dies hängt im Wesentlichen von der Anwendung und den Dimensionen des Ringventils 1 ab. In der bevorzugsten Ausgestaltung ist aber eine radial und in Umfangsrichtung zwischen den Ringführungsnasen 15 und den Dichtflächen 17 durchgehende Vertiefung 18 vorgesehen.

Genauso muss die Vertiefung 18 nicht eben sein, wie im Beispiel nach Fig. 4, sondern könnte einen beliebigen Querschnitt aufweisen, sodass die Abströmung nicht oder nur gering beeinflusst wird. Denkbar wäre z.B. eine Querschnittsform der Vertiefung 18, die unmittelbar neben den Dichtflächen 17 tiefer ist als in der Mitte der Vertiefung 18, z.B. eine Vertiefung 18 mit einem konvexen oder konkaven Boden oder eine Vertiefung 18 bei der ein pyramidenförmiger Mittelteil stehen bleibt.

Durch ein Nachbearbeiten der Dichtflächen 17 müssen unter Umständen natürlich auch andere Teile des Ringventils 1, wie z.B. die Distanzscheibe 9 oder die Höhe der Ringführungsnasen 15, nachbearbeitet werden, um die Funktion des Ringventils 1 beizubehalten und um insbesondere auch den vorgegebenen Hub des Ringventils 1 nicht zu verändern.

## Patentansprüche

1. Selbsttätiges Ringventil mit einem Ventilsitz (3), mit einem Ventilfänger (2), mit einer Anzahl zwischen Ventilsitz (3) und Ventilfänger (2) angeordneten und hin- und herbeweglichen konzentrischen Dichtringen (5), die mit dem Ventilsitz (3) dichtend zusammenwirken, und mit einer Anzahl von am Ventilsitz (3) in radialer und in Umfangsrichtung verteilt angeordneten und axial davon abstehenden Ringführungsnasen (15) zur Führung der Dichtringe (5) in radialer und axialer Richtung, **dadurch gekennzeichnet, dass** im Ventilsitz (3) zwischen zwei auf dem selben Radius liegenden Ringführungsnasen (15) eine sich in Umfangsrichtung erstreckende Vertiefung (18) vorgesehen ist.

2. Selbsttätiges Ringventil nach Anspruch 1, **dadurch gekennzeichnet, dass** die Vertiefung (18) zwischen zwei in Umfangsrichtung benachbarten Ringführungsnasen (15) durchgehend vorgesehen ist.

3. Selbsttätiges Ringventil nach Anspruch 1 oder 2, **dadurch gekennzeichnet, dass** die Vertiefung (18) zwischen zwei benachbarten Dichtflächen (17) des Ventilsitzes (3) durchgehend vorgesehen ist.

4. Selbsttätiges Ringventil nach einem der Ansprüche 1 bis 3, **dadurch gekennzeichnet, dass** an einer Ringführungsnase (15) im Bereich des Überganges zum Ventilsitz (3) eine Hinterschneidung (21) angeordnet ist.

5. Verfahren zum Herstellen eines Ventilsitzes (3) eines Ringventils (1), mit einer Anzahl von im Ventilsitz (3) radial und in Umfangsrichtung verteilt angeordneten und axial davon abstehenden Ringführungsnasen (15) zur Führung von Dichtringen (5), **dadurch gekennzeichnet, dass** im Ventilsitz (3) zwischen zwei auf dem selben Radius liegenden Ringführungsnasen (15) eine sich in Umfangsrichtung erstreckende Vertiefung (18) eingearbeitet wird.

6. Herstellungsverfahren nach Anspruch 5, **dadurch gekennzeichnet, dass** zwischen den Ringführungsnasen (15) eine in Umfangsrichtung durchgehende Vertiefung (3) eingearbeitet wird.

7. Herstellungsverfahren nach Anspruch 5 oder 6, **dadurch gekennzeichnet, dass** zwischen zwei benachbarten Dichtflächen (17) des Ventilsitzes (3) eine in radialer Richtung durchgehende Vertiefung (18) eingearbeitet ist.

8. Verfahren zum Nachbearbeiten eines Ventilsitzes (3) eines Ringventils (1), mit einer Anzahl von im Ventilsitz (3) radial und in Umfangsrichtung verteilt angeordneten und axial davon abstehenden Ringführungsnasen (15) zur Führung von Dichtringen, **dadurch gekennzeichnet, dass** eine Dichtfläche (17) des Ventilsitzes (3), die von einer benachbarten Dichtfläche (17) durch eine zwischen zwei in Umfangsrichtung benachbarten Ringführungsnasen (15) angeordnete und sich in Umfangsrichtung erstreckende Vertiefung (18) getrennt wird, abgedreht wird.
